# EUROPÄISCHE PATENTANMELDUNG

(11) **EP 1 873 990 A1**
(43) Veröffentlichungstag der Anmeldung: **02.01.2008**
(21) Anmeldenummer: 06013395.6
(22) Anmeldetag: 28.06.2006
(51) Int. Cl.: H04L 29/06, H04L 12/18

(54) **Multicast-Übertragung von skalierbaren Daten**

(71) Anmelder: NOKIA SIEMENS NETWORKS GMBH & CO. KG, 81541 München (DE)
(72) Erfinder: Luo, Jijun, 80797 München (DE); Schulz, Egon, Dr., 80993 München (DE)

(57) **Zusammenfassung**

Die Erfindung betrifft ein Verfahren zur Kommunikation per Funk, bei welchem an eine Gruppe von Teilnehmerstationen (MS1, MS2, MS3) von einer netzseitigen Funkstation zu übertragende skalierbare Informationen (MBMS) vorliegen, wobei die skalierbaren Informationen (MBMS) umfassen: Basis-Informationen (MBMS-BL) und die Basis-Informationen (MBMS-BL) ergänzende Informationen (MBMS-EL1, MBMS-EL2), wobei die ergänzenden Informationen (MBMS-EL1, MBMS-EL2) die Qualität der Basis-Informationen (MBMS-BL) erhöhen. Die Basis-Informationen (MBMS-BL) werden unter Verwendung von ersten Übertragungsparametern übertragen, wobei die ersten Übertragungsparameter an erste Funkverbindungsbedingungen angepasst sind. Die ergänzenden Informationen (MBMS-EL1, MBMS-EL2) werden unter Verwendung von zweiten von den ersten Übertragungsparametern unterschiedlichen Übertragungsparametern übertragen, wobei die zweiten Übertragungsparameter an zweite gegenüber den ersten Funkverbindungsbedingungen bessere Funkverbindungsbedingungen angepasst sind. Weiterhin betrifft die Erfindung eine netzseitige Funkstation zur Durchführung des Verfahrens.

## Beschreibung

Die Erfindung betrifft ein Verfahren zur Kommunikation per Funk, bei welchem skalierbare Informationen von einer netzseitigen Funkstation an eine Gruppe von Teilnehmerstationen übertragen werden.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

In Abwärtsrichtung, d.h. von einer netzseitigen Funkstation zu Teilnehmerstationen, können Informationen über Punkt-zu-Punkt-Kanäle an einzelne Teilnehmerstationen oder über Punkt-zu-Mehrpunkt-Kanäle gleichzeitig an eine Mehrzahl von Teilnehmerstationen übertragen werden. Beispiele für Dienste, bei welchen mehrere Teilnehmerstationen gleichzeitig durch eine Nachricht adressiert werden, sind DVB-H (Digital Video Broadcasting - Handhelds), DMB (Digital Multimedia Broadcasting), und MBMS (Multimedia Broadcast Multicast Service).

Der Erfindung liegt die Aufgabe zugrunde, ein Verfahren zur Kommunikation per Funk aufzuzeigen, bei welchem an eine Gruppe von Teilnehmerstationen von einer netzseitigen Funkstation zu übertragende Informationen vorliegen. Weiterhin soll eine netzseitige Funkstation zur Durchführung des Verfahrens vorgestellt werden.

Diese Aufgabe wird durch ein Verfahren mit den Merkmalen des Anspruchs 1, sowie durch eine Vorrichtung mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zur Kommunikation per Funk liegen an eine Gruppe von Teilnehmerstationen von einer netzseitigen Funkstation zu übertragende skalierbare Informationen vor. Die skalierbaren Informationen umfassen hierbei Basis-Informationen, sowie die Basis-Informationen ergänzende Informationen. Die ergänzenden Informationen erhöhen die Qualität der Basis-Informationen. Die Basis-Informationen werden unter Verwendung von ersten Übertragungsparametern übertragen, wobei die ersten Übertragungsparameter an erste Funkverbindungsbedingungen angepasst sind. Die ergänzenden Informationen werden unter Verwendung von zweiten von den ersten Übertragungsparametern unterschiedlichen Übertragungsparametern übertragen, wobei die zweiten Übertragungsparameter an zweite gegenüber den ersten Funkverbindungsbedingungen bessere Funkverbindungsbedingungen angepasst sind.

Es ist eine Gruppe von Teilnehmerstationen vorhanden, an welche von einer netzseitigen Funkstation Informationen zu senden sind. Dies bedeutet, dass eine einmalige Versendung von Informationen durch die netzseitige Funkstation erfolgt, wobei die einmalige Versendung bestimmt ist für die Teilnehmerstationen der Gruppe. Die für die Gruppe bestimmten Informationen werden nicht von der netzseitigen Funkstation getrennt an die einzelnen Mitglieder der Gruppe gesendet, sondern über so genannte gemeinsame Kanäle. Eine derartige Versendung von Informationen an eine Gruppe von Teilnehmerstationen erfolgt z.B. bei DVB-H (Digital Video Broadcasting - Handhelds), DMB (Digital Multimedia Broadcasting), MBMS (Multimedia Broadcast Multicast Service).

Bei den an die Gruppe zu versendenden Informationen handelt es sich um skalierbare Informationen. Es werden daher sowohl Basis-Informationen übertragen, als auch ergänzende Informationen. Die ergänzenden Informationen erhöhen die Qualität der Basis-Informationen, wenn ein Empfänger sie zusätzlich zu den Basis-Informationen dekodiert. Die Basis-Informationen können auch ohne die ergänzenden Informationen empfängerseitig dekodiert und verarbeitet werden, ein Empfang der ergänzenden Informationen ist hierzu nicht nötig. Vorzugsweise findet die Übertragung der Basis-Informationen vor derjenigen der ergänzenden Informationen statt. Bei den skalierbaren Informationen kann es sich beispielsweise um Bildinformationen, Audioinformationen, Videoinformationen, Sprachinformationen, oder auch um eine Kombination dieser Informationstypen handeln.

Für die Übertragung der Basis-Informationen und der ergänzenden Informationen werden jeweils Übertragungsparameter verwendet. Die Übertragungsparameter werden senderseitig durch eine bestimmte Bearbeitung der zu sendenden Informationen eingestellt, wie z.B. durch eine bestimmte Kodierung, Modulation, Spreizung, Sendeleistung. Hierbei können die Übertragungsparameter bestimmten Funkverbindungsbedingungen angepasst werden, es können beispielsweise Übertragungsparameter für gute Funkverbindungsbedingungen und Übertragungsparameter für schlechte Funkverbindungsbedingungen eingesetzt werden. Die Güte von Funkverbindungsbedingungen kann durch verschiedene Größen ausgedrückt werden, ein geeignetes Maß für die Güte der Funkverbindungsbedingungen zwischen einem Sender und einem Empfänger ist z.B. die mit der Funkübertragung von dem Sender an den Empfänger einhergehende Dämpfung.

In Weiterbildung der Erfindung umfassen die ersten Übertragungsparameter eine erste Datenrate und die zweiten Übertragungsparameter eine gegenüber der ersten Datenrate höhere Datenrate. Die Datenrate kann senderseitig insbesondere durch die Wahl der Kanalkodierung und/oder der Spreizung eingestellt werden. Zusätzlich oder alternativ können die ersten Übertragungsparameter eine erste Sendeleistung und die zweiten Übertragungsparameter eine gegenüber der ersten Sendeleistung geringere Sendeleistung umfassen.

Einer Ausgestaltung der Erfindung gemäß umfassen die skalierbaren Informationen erste ergänzende Informationen und zweite ergänzende Informationen, wobei die ersten ergänzenden Informationen unter Verwendung der zweiten Übertragungsparameter übertragen werden, und die zweiten ergänzenden Informationen unter Verwendung von dritten von den ersten und den zweiten Übertragungsparametern unterschiedlichen Übertragungsparametern übertragen werden, wobei die dritten Übertragungsparameter an dritte gegenüber den ersten und den zweiten Funkverbindungsbedingungen bessere Funkverbindungsbedingungen angepasst sind. Dieses Vorgehen kann auch auf eine größere Anzahl als zwei ergänzende Informationen angewandt werden. Es können somit eine Mehrzahl von ergänzenden Informationen vorliegen, wobei die Übertragung von ergänzender Information zu ergänzender Information für jeweils bessere Funkverbindungsverbindungen geeignet ist.

Besonders vorteilhaft ist es, wenn die ersten Übertragungsparameter derart sind, dass die Basis-Informationen von allen Teilnehmerstationen der Gruppe empfangbar und verarbeitbar sind. Zusätzlich oder alternativ können die zweiten Übertragungsparameter derart sein, dass die ergänzenden Informationen lediglich von einer Teilmenge der Teilnehmerstationen der Gruppe empfangbar und verarbeitbar sind. Wenn ein Empfänger eine von einem Sender gesendete Nachricht erfolgreich dekodieren kann und somit der dekodierte Inhalt der Nachricht vollständig oder annähernd dem vom Sender versendeten Inhalt entspricht, bedeutet dies, dass er diese Nachricht empfangen und verarbeiten kann. Ob dies möglich ist, hängt zumindest u.a. von den vom Sender gewählten Übertragungsparametern ab.

In Ausgestaltung der Erfindung erfolgt in Abhängigkeit von den jeweiligen Funkverbindungsbedingungen einer Gruppierung der Teilnehmerstationen der Gruppe in N Untergruppen, und es werden N-1 ergänzende Informationen mit jeweils voneinander unterschiedlichen Übertragungsparametern übertragen. Die Entscheidung über die Größe von N kann hierbei von der netzseitigen Funkstation oder einer anderen Einrichtung getroffen werden. Die Anzahl N der Untergruppen kann insbesondere von den Funkverbindungsbedingungen der Teilnehmerstationen der Gruppe abhängig gemacht werden. So eignet sich z.B. die Verwendung von vielen Untergruppen bei vielen sehr unterschiedlichen Funkverbindungsbedingungen der Teilnehmerstationen. Abhängig von der Anzahl N der Untergruppen wird eine entsprechende Anzahl unterschiedlicher ergänzender Informationen gebildet und übertragen. Die Anzahl N-1 der ergänzenden Informationen ist um 1 niedriger als die Anzahl N der Untergruppen, so dass für eine Untergruppe lediglich die Basis-Informationen bestimmt sind.

Vorteilhaft ist es, wenn vor der Übertragung der skalierbaren Informationen die netzseitige Funkstation von einer oder mehren Teilnehmerstationen der Gruppe Informationen empfängt betreffend die jeweiligen Funkverbindungsbedingungen zwischen der Teilnehmerstation und der netzseitigen Funkstation. Auf diese Weise können sich die ersten und die zweiten Übertragungsparameter an den Funkverbindungsbedingungen, über welche die Teilnehmerstationen die netzseitige Funkstation informiert haben, orientieren.

Bei den skalierbaren Informationen kann es sich um Videodaten handeln, wobei die ergänzenden Informationen die Qualität der Basis-Informationen hinsichtlich einer zeitlich und/oder einer örtlichen Auflösung und/oder hinsichtlich eines Signalzu-Rausch-Verhältnisses erhöhen können. So kann z.B. eine erste ergänzende Information die Basis-Informationen um eine Einheit in der Dimension der örtlichen Auflösung erhöhen, und eine zweite ergänzende Information um eine Einheit in der Dimension der örtlichen Auflösung und um eine Einheit in der Dimension der zeitlichen Auflösung.

Einer Weiterbildung der Erfindung gemäß werden erste und zweite skalierbare Informationen übertragen, wobei sich die ersten und/oder die zweiten Übertragungsparameter der ersten skalierbaren Informationen von den ersten und/oder den zweiten Übertragungsparametern der zweiten skalierbaren Informationen unterscheiden. Auf diese Weise kann bei der Übertragung von skalierbaren Informationen eine Anpassung an eine Veränderung von Funkverbindungsbedingungen stattfinden. Diese Veränderung kann z.B. durch die Mobilität von Teilnehmerstationen der Gruppe hervorgerufen werden.

Der erfindungsgemäßen netzseitigen Funkstation liegen an eine Gruppe von Teilnehmerstationen zu übertragende skalierbare Informationen vor, wobei die skalierbaren Informationen Basis-Informationen und die Basis-Informationen ergänzende Informationen umfassen, wobei die ergänzenden Informationen die Qualität der Basis-Informationen erhöhen. Die erfindungsgemäße netzseitige Funkstation weist Mittel auf zum Versenden der Basis-Informationen unter Verwendung von ersten Übertragungsparametern, wobei die ersten Übertragungsparameter an erste Funkverbindungsbedingungen angepasst sind, sowie Mittel zum Versenden der ergänzenden Informationen unter Verwendung von zweiten Übertragungsparametern, wobei die zweiten Übertragungsparameter an zweite gegenüber den ersten Funkverbindungsbedingungen bessere Funkverbindungsbedingungen angepasst sind.

Die erfindungsgemäße netzseitige Funkstation eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel umfassen.

Im folgenden wird die Erfindung anhand eines Ausführungsbeispiels näher erläutert. Dabei zeigen:
- Figur 1:: einen Ausschnitt aus einem Mobilfunkkommunikationssystem,
- Figur 2:: eine Aufteilung von zu versendenden Informationen.

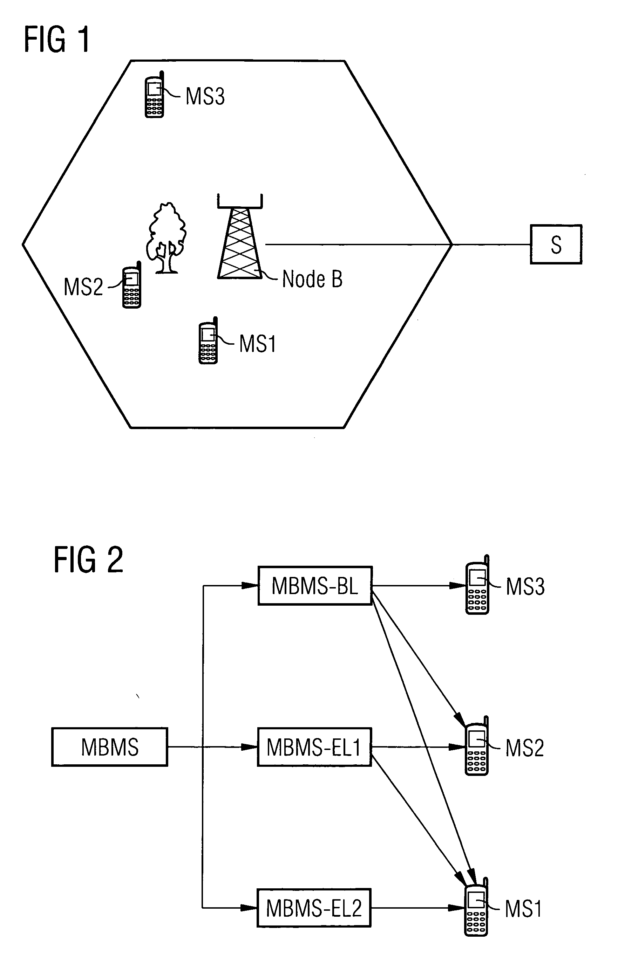

Der in Figur 1 dargestellte Ausschnitt aus einem Mobilfunkkommunikationssystem zeigt die Funkzelle der netzseitigen Funkstation NodeB. In dieser Funkzelle befinden sich die Teilnehmerstationen MS1, MS2 und MS3, welche per Funk mit der netzseitigen Funkstation NodeB kommunizieren können. Bei den Teilnehmerstationen MS1, MS2 und MS3 kann es sich z.B. um mobile Telefone, mobile Computer, oder PDAs (Personal Digital Assistants) handeln. Die netzseitige Funkstation NodeB kann mit weiteren netzseitigen Einrichtungen verbunden sein; in Figur 1 ist die Verbindung der netzseitigen Funkstation NodeB mit der Einrichtung S dargestellt. Bei der Einrichtung S kann es sich um eine Einrichtung zur Kontrolle der netzseitigen Funkstation NodeB, bei UMTS als RNC (Radio Network Controller) bezeichnet, oder um einen Server, welcher der netzseitigen Funkstation NodeB zu versendende Informationen zur Verfügung stellt, handeln. Gegebenenfalls vorhandene weitere netzseitige Einrichtungen, Funkzellen, sowie Teilnehmerstationen sind aus Gründen der Übersichtlichkeit nicht in Figur 1 dargestellt. Bei dem betrachteten Mobilfunkkommunikationssystem kann es sich z.B. um ein System nach dem Standard UMTS, oder um ein System nach einer Weiterentwicklung von UMTS, als 3G LTE (LTE: Long Term Evolution) bezeichnet, oder auch um ein System der 4. Generation handeln.

Die Teilnehmerstationen MS1, MS2 und MS3 bilden eine Gruppe, an welche von der netzseitigen Funkstation NodeB gemeinsame Nachrichten mit Nutzinformationen gesendet werden. Hierzu sind die Teilnehmerstationen MS1, MS2 und MS3 für einen bestimmen Dienst subskribiert. Die gemeinsamen Nachrichten werden nicht auf dedizierten, einer einzelnen Teilnehmerstation zugewiesenen Funkressourcen übertragen, sondern auf Funkkanälen, welche von mehreren Teilnehmerstationen abgehört werden, so genannte gemeinsame Kanäle bzw. common oder shared channels. Es handelt sich somit um eine Broadcast- oder Multicast-Ausstrahlung der gemeinsamen Nachrichten durch die netzseitige Funkstation NodeB. Eine Möglichkeit zur Realisierung der Übertragung der gemeinsamen Nachrichten ist DVB-H (Digital Video Broadcasting - Handhelds), oder DMB (Digital Multimedia Broadcasting), Übertragungsstandards, mit welchen digitale Rundfunkprogramme an mobile oder stationäre Endgeräte gesendet werden können.

Im folgenden wird beispielhaft davon ausgegangen, dass die Übertragung der gemeinsamen Nachrichten über MBMS (Multimedia Broadcast Multicast Service), einer Erweiterung von UMTS für Multimedia- und Broadcastdienste, erfolgt. Der bei UMTS angebotene Dienst MBMS, beschrieben z.B. in
3GPP TS 25.346 V6.2.0 (2004-09), 3rd Generation Partnership Project; Technical Specification Group Radio Access Network; Introduction of the Multimedia Broadcast Multicast Service (MBMS) in the Radio Access Network (RAN); Stage 2 (Release 6)
ermöglicht die gleichzeitige Verteilung - insbesondere multimedialer Inhalte wie z.B. Video und Audio - an mehrere Nutzer. Hierfür wird ein als S-CCPCH (Secondary Common Control Physical Channel) bezeichneter Funkkanal genutzt, bei welchem es sich um einen gemeinsamen Kanal in Abwärtsrichtung, d.h. um einen Punkt-zu-Mehrpunkt-Kanal, handelt. Die Versendung von MBMS-Nachrichten kann auch - im Gegensatz zur Versendung an eine Mehrzahl von Teilnehmerstationen - an einzelne Teilnehmerstationen erfolgen. Im Folgenden wird jedoch die Versendung von MBMS-Nachrichten auf einem gemeinsamen Kanal gleichzeitig an die Teilnehmerstationen MS1, MS2 und MS3 betrachtet.

Bei den an die Gruppe der Teilnehmerstationen MS1, MS2 und MS3 zu versendenden MBMS-Nachrichten handelt es sich um skalierbare Daten. Bei der Übertragung von skalierbaren Daten werden die Basis-Informationen übertragen, und zusätzlich Informationen, welche die Basis-Informationen ergänzen. Skalierbare Daten weisen somit die Eigenschaft auf, dass sie mit niedriger Qualität bei dem Empfänger vorliegen können, indem der Empfänger nur die Basis-Informationen oder die Basis-Informationen und manche der ergänzenden Informationen dekodiert, und nicht die Basis-Informationen und alle ergänzenden Informationen. Eine höhere Qualität wird empfängerseitig dadurch erreicht, dass neben den Basis-Informationen eine oder mehrere ergänzende Informationen ausgewertet werden. Die ergänzenden Informationen bauen hierbei auf die Basis-Informationen und aufeinander auf, d.h. eine Auswertung von ergänzenden Informationen kann nur dann erfolgen, wenn die Basis-Informationen und alle vorhergehenden ergänzenden Informationen empfangen und ausgewertet werden.

Im folgenden wird davon ausgegangen, dass die MBMS-Nachrichten Videoinformationen enthalten. In diesem Fall kann eine Skalierbarkeit in den Dimensionen der zeitlichen Auflösung, der örtlichen Auflösung, und des Signal-zu-Rausch-Verhältnisses zum Einsatz kommen. Durch den Empfang und die Verarbeitung von ergänzenden Informationen zusätzlich zu den Basis-Informationen und gegebenenfalls zu ergänzenden Informationen mit einer niedrigeren Rangfolge wird empfängerseitig die visuelle Qualität der Videoinformationen verbessert. Die Erfindung ist jedoch auch auf die Übertragung von anderen Arten von skalierbaren Daten anwendbar, z.B. in Form von Standbildern und Audio-Informationen.

Figur 2 zeigt schematisch, wie eine an die Gruppe der Teilnehmerstationen MS1, MS2 und MS3 zu versendende skalierbare MBMS-Nachricht MBMS aufteilbar ist. Es werden die Basis-Informationen MBMS-BL (BL: Base Layer) gebildet. Grundsätzlich reicht es, wenn ein Empfänger die Basis-Informationen MBMS-BL empfängt und dekodiert, diese ergeben zwar eine erkennbare Bildfolge, jedoch keine hohe Qualität. Eine Teilnehmerstation MS1, MS2 oder MS3 muss, um die Videoinformationen der MBMS-Nachricht MBMS anzeigen zu können, zumindest die Basis-Informationen MBMS-BL dekodieren. Weiterhin werden die ergänzenden Informationen MBMS-EL1 (EL: Enhancement Layer) und MBMS-EL2, deren Inhalt sich voneinander unterscheidet, gebildet. Das Vorhandensein zweier ergänzender Informationen ist lediglich ein Beispiel, es können auch lediglich eine oder eine größere Mehrzahl von ergänzenden Informationen zum Einsatz kommen. Die Dekodierung der ergänzenden Informationen MBMS-EL1 zusätzlich zu den Basis-Informationen MBMS-BL, und gegebenenfalls der ergänzenden Informationen MBMS-EL2 zusätzlich zu den Basis-Informationen MBMS-BL und den ergänzenden Informationen MBMS-EL1 verbessert die empfängerseitige Qualität der Videoinformation der MBMS-Nachricht MBMS.

Vorzugsweise werden vom senderseitigen Kodierer die gemeinsamen Daten MBMS gemäß einer skalierbaren Erweiterung des Standards H.264/MPEG-4 AVC bearbeitet, beschrieben z.B. in
Heiko Schwarz, Detlev Marpe, und Thomas Wiegand: MCTF and Scalability Extension of H.264/AVC, Proc. PCS'04, San Francisco, CA, USA, December 15.-17. 2004.

Die Basis-Informationen MBMS-BL, sowie die ergänzenden Informationen MBMS-EL1 und MBMS-EL2 werden verschiedenen Funkkanälen zugeordnet und über diese versendet. Bei den verschiedenen Funkkanälen kann es sich z.B. um verschiedene Kodes und/ oder verschiedene Zeitschlitze und/oder verschiedene Subbänder eines Frequenzbandes handeln. Die netzseitige Funkstation NodeB teilt den Teilnehmerstationen MS1, MS2 und MS3 mit, auf welchen Funkkanälen die Basis-Informationen MBMS-BL, die ergänzenden Informationen MBMS-EL1, und die ergänzenden Informationen MBMS-EL2 jeweils übertragen werden. Den Teilnehmerstationen MS1, MS2 und MS3 sind somit die Abhängigkeiten der auf den verschiedenen Kanälen übertragenen Schichten der MBMS-Nachricht MBMS bekannt, so dass sie die für sie relevanten Funkkanäle abhören können.

Die Funkverbindungsbedingungen bzw. die Funkübertragungsbedingungen zwischen der netzseitigen Funkstation NodeB und der Teilnehmerstation MS1, zwischen der netzseitigen Funkstation NodeB und der Teilnehmerstation MS2, sowie zwischen der netzseitigen Funkstation NodeB und der Teilnehmerstation MS3 unterscheiden sich voneinander. Schlechte Funkübertragungsbedingungen zwischen der netzseitigen Funkstation NodeB und einer Teilnehmerstation, d.h. eine starke Dämpfung und/oder Verfälschung von Funksignalen während der Übertragung, kann z.B. durch einen großen Abstand zwischen der netzseitigen Funkstation NodeB und der Teilnehmerstation hervorgerufen werden, oder durch Hindernisse zwischen der netzseitigen Funkstation NodeB und der Teilnehmerstation. Im folgenden wird davon ausgegangen, dass zwischen der netzseitigen Funkstation NodeB und der Teilnehmerstation MS1 gute Funkübertragungsbedingungen vorherrschen, zwischen der netzseitigen Funkstation NodeB und der Teilnehmerstation MS2 aufgrund eines zwischen der netzseitigen Funkstation NodeB und der Teilnehmerstation MS2 befindlichen Baumes mittlere, und zwischen der netzseitigen Funkstation NodeB und der Teilnehmerstation MS3 aufgrund des großen Abstandes schlechte.

Vor der Versendung von Daten durch die netzseitige Funkstation NodeB kann im Rahmen der senderseitigen Bearbeitung im digitalen und/oder analogen Bereich eine Anpassung an die aktuellen Funkübertragungsbedingungen erfolgen. Insbesondere die folgenden Übertragungsparameter können auf diese Weise angepasst werden:
- Datenrate: durch eine stärkere Kanalkodierung wird zu versendenden Daten mehr Redundanz hinzugefügt. Hierdurch steigt die Wahrscheinlichkeit, dass diese Daten empfängerseitig korrekt dekodiert werden können. Aufgrund eines größeren Umfangs an Redundanz sinkt die Netto-Datenrate, da der Anteil der Nutzdaten an den tatsächlich übertragenen Daten mit zunehmender Kanalkodierung abnimmt. Es gilt daher, dass die eingesetzte Datenrate mit verbesserten Funkübertragungsbedingungen gesteigert werden kann. Unterschiedliche Datenraten können bei gleicher Kodierung und Modulation auch durch die Verwendung verschiedener Spreizkodes erreicht werden. Beispielsweise bedeutet ein Spreizfaktor von 64 eine verdoppelte Datenrate gegenüber einem Spreizfaktor von 128 bei gleicher Modulation und Kodierung.
   und/oder
- Sendeleistung: durch eine höhere Sendeleistung kann der nachteilige Effekt der Dämpfung bei der Funkübertragung vermindert werden. Es gilt daher, dass die eingesetzte Sendeleistung mit verbesserten Funkübertragungsbedingungen vermindert werden kann.

Für die Basis-Informationen MBMS-BL werden die Übertragungsparameter so eingestellt, dass sie für schlechte Funkübertragungsbedingungen geeignet sind. Somit können, in Figur 2 durch von den Basis-Informationen MBMS-BL ausgehende Pfeile symbolisiert, die Basis-Informationen MBMS-BL von der Teilnehmerstation MS1, für welche gute Funkübertragungsbedingungen vorliegen, sowie von der Teilnehmerstation MS2, für welche mittlere Funkübertragungsbedingungen vorliegen, und von der Teilnehmerstation MS3, für welche schlechte Funkübertragungsbedingungen vorliegen, korrekt empfangen und dekodiert werden.

Für die ergänzenden Informationen MBMS-EL1 werden die Übertragungsparameter so eingestellt, dass sie für mittlere Funkübertragungsbedingungen geeignet sind. Somit können, in Figur 2 durch von den ergänzenden Informationen MBMS-EL1 ausgehende Pfeile symbolisiert, die ergänzenden Informationen MBMS-EL1 von der Teilnehmerstation MS1, für welche gute Funkübertragungsbedingungen vorliegen, und von der Teilnehmerstation MS2, für welche mittlere Funkübertragungsbedingungen vorliegen, korrekt empfangen und dekodiert werden. Auf die Teilnehmerstation MS3 hingegen, für welche schlechte Funkübertragungsbedingungen vorliegen, trifft dies nicht zu.

Für die ergänzenden Informationen MBMS-EL2 werden die Übertragungsparameter so eingestellt, dass sie für gute Funkübertragungsbedingungen geeignet sind. Somit können, in Figur 2 durch einen von den ergänzenden Informationen MBMS-EL2 ausgehenden Pfeil symbolisiert, die ergänzenden Informationen MBMS-EL2 von der Teilnehmerstation MS1, für welche gute Funkübertragungsbedingungen vorliegen, korrekt empfangen und dekodiert werden. Auf die Teilnehmerstation MS3, für welche schlechte Funkübertragungsbedingungen vorliegen, und auf die Teilnehmerstation MS2, für welche mittlere Funkübertragungsbedingungen vorliegen, trifft dies hingegen nicht zu.

Somit empfängt und verarbeitet die Teilnehmerstation MS1 die Basis-Informationen MBMS-BL, die ergänzenden Informationen MBMS-EL1, und die ergänzenden Informationen MBMS-EL2, und somit die Basis-Informationen MBMS-BL und alle ergänzenden Informationen MBMS-EL1 und MBMS-EL2. Daher liegt der Teilnehmerstation MS1 aufgrund ihrer guten Funkübertragungsbedingungen die MBMS-Nachricht MBMS in hoher Qualität vor. Die Teilnehmerstation MS2 empfängt die Basis-Informationen MBMS-BL und die ergänzenden Informationen MBMS-EL1. Somit liegt der Teilnehmerstation MS2 aufgrund ihrer mittleren Funkübertragungsbedingungen die MBMS-Nachricht MBMS in mittlerer Qualität vor. Die Teilnehmerstation MS3 schließlich empfängt nur die Basis-Informationen MBMS-BL. Somit liegt der Teilnehmerstation MS3 aufgrund ihrer schlechten Funkübertragungsbedingungen die MBMS-Nachricht MBMS lediglich in niedriger Qualität vor.

Es wird ein konkretes Zahlenbeispiel betrachtet, wobei die unterschiedlichen Übertragungsparameter aus unterschiedlichen Datenraten bestehen: die Teilnehmerstation MS1 kann Nachrichten mit einer Datenrate von 250 kbps empfangen, die Teilnehmerstation MS2 mit 150 kbps, und die Teilnehmerstation MS3 mit 100 kbps. Für die verschiedenen Schichten der MBMS-Nachricht MBMS können die folgenden Datenraten gewählt werden: 100 kbps für die Basis-Informationen MBMS-BL, 150 kbps für die ergänzenden Informationen MBMS-EL1, und 250 kbps für die ergänzenden Informationen MBMS-EL2. Die für die ergänzenden Informationen MBMS-EL2 verwendete Datenrate von 250 kbps übersteigt die von der Teilnehmerstation MS2 empfangbare Datenrate von 150 kbps, so dass die Teilnehmerstation MS2 nur die Basis-Informationen MBMS-BL und die ergänzenden Informationen MBMS-EL1 empfangen und auswerten kann. Die für die ergänzenden Informationen MBMS-EL1 und MBMS-EL2 verwendete Datenrate von 150 kbps bzw. 250 kbps übersteigt die von der Teilnehmerstation MS3 empfangbare Datenrate von 100 kbps, so dass die Teilnehmerstation MS3 nur die Basis-Informationen MBMS-BL empfangen und auswerten kann.

Würde hingegen keine Aufteilung der MBMS-Nachricht in die verschiedenen Schichten erfolgen, so müsste für die gesamte MBMS-Nachricht MBMS eine einheitliche Datenrate eingesetzt werden. Würde eine Datenrate von 100 kbps für die Ausstrahlung der gesamten MBMS-Nachricht verwendet, würde jede der Teilnehmerstationen MS1, MS2 und MS3 die MBMS-Nachricht MBMS korrekt empfangen und dekodieren können. Dies hätte allerdings den Nachteil, dass aufgrund der niedrigen Datenrate ein großer Umfang an Funkressourcen für die Ausstrahlung der MBMS-Nachricht MBMS benötigt würde. Wenn hingegen eine größere Datenrate wie z.B. 150 kbps eingesetzt würde, könnte die Teilnehmerstation MS3 die gesamte MBMS-Nachricht MBMS wahrscheinlich nicht korrekt empfangen und dekodieren, so dass die von der Teilnehmerstation MS3 erfahrene Dienstqualität sinken würde. Das anhand von Figur 2 erläuterte Vorgehen hingegen ermöglicht es der Teilnehmerstation MS3 zumindest, die Videoinformationen der MBMS-Nachricht MBMS mit einer bestimmten Mindestqualität zu erhalten.

Verschiedenen Teilnehmerstationen liegen somit unterschiedlich viele Schichten der MBMS-Nachricht vor, wobei jede Teilnehmerstation zumindest die Basis-Informationen MBMS-BL empfangen kann. Durch diese Wahl der Übertragungsparameter für die Basis-Informationen MBMS-BL ist gewährleistet, dass jeder Teilnehmerstation der MBMS-Gruppe die MBMS-Nachrichten in einer bestimmten Mindestqualität vorliegen. Eine höhere Qualität ist nur für Teilnehmerstationen mit besseren Funkübertragungsbedingungen erreichbar. Dies hat den Vorteil, dass Funkressourcen für die Ausstrahlung der weiteren Schichten der MBMS-Nachrichten MBMS eingespart werden. Durch die ergänzenden Informationen würde zwar empfängerseitig die Qualität der Videoinformationen der MBMS-Nachricht MBMS gesteigert werden, jedoch würde ein größeres Ausmaß an Funkressourcen benötigt, um auch für Teilnehmerstationen mit weniger guten Funkübertragungsbedingungen diese weiteren Schichten zur Verfügung zu stellen. Dadurch, dass auf dieses Zur-Verfügung-Stellen von weiteren Schichten an Teilnehmerstationen mit schlechten Funkübertragungsbedingungen verzichtet wird, können die für ein Mindestmaß an Qualität der Videoinformationen nicht benötigten weiteren Schichten effizienter und funkressourcenschonender übertragen werden.

Die Teilnehmerstationen MS1, MS2 und MS3 führen Messungen zur Bestimmung ihrer aktuellen Funkübertragungsbedingungen durch und informieren die netzseitige Funkeinrichtung NodeB über die Messergebnisse oder über die von ihnen ermittelten Funkübertragungsbedingungen. Es ist möglich, dass nur eine Teilmenge der Teilnehmerstationen dieses Reporten von Messungen durchführt. Netzseitig wird daraufhin entschieden, in wie viele Schichten die MBMS-Nachrichten aufgeteilt werden, und welche Übertragungsparameter für die verschiedenen Schichten eingesetzt werden. Diese Entscheidung wird vorzugsweise von der netzseitigen Funkeinrichtung NodeB getroffen, sie kann alternativ auch von der Einrichtung S getroffen werden.

Bislang wurde die Situation betrachtet, dass die drei Teilnehmerstationen MS1, MS2 und MS3 mit voneinander unterschiedlichen Funkübertragungsbedingungen als Empfänger der MBMS-Nachrichten vorhanden sind, und dass die MBMS-Nachrichten in drei Schichten aufgeteilt werden. Im allgemeinen können die Teilnehmerstationen der MBMS-Gruppe in Untergruppen aufgeteilt werden, wobei jede Untergruppe aus einer oder mehreren Teilnehmerstationen besteht, für welche ähnliche Funkübertragungsbedingungen vorliegen. Z.B. könnte eine erste Untergruppe aus den Teilnehmerstationen MS1 und MS2 mit ähnlichen Funkübertragungsbedingungen bestehen, und eine zweite Untergruppe aus der Teilnehmerstation MS3. Die Anzahl der Schichten der MBMS-Nachrichten, d.h. die Basis-Informationen und alle ergänzenden Informationen, entspricht der Anzahl der Untergruppen. In Bezug auf die für eine Schicht zu verwendenden Übertragungsparameter sollten diese an derjenigen Teilnehmerstation einer Untergruppe orientiert sein, welche die schlechtesten Funkübertragungsbedingungen der Untergruppe aufweist. Wenn wie im genannten Beispiel die beiden Teilnehmerstationen MS1 und MS2 zu einer Untergruppe zusammengefasst werden, wird neben den Basis-Informationen lediglich eine ergänzende Information verwendet. Die Übertragungsparameter für die Basis-Informationen werden anhand der Funkübertragungsbedingungen der Teilnehmerstation MS3 bestimmt, diejenigen für die ergänzende Information anhand der Funkübertragungsbedingungen der Teilnehmerstation MS2.

Ändern sich die von den Teilnehmerstationen erfahrenen Funkübertragungsbedingungen mit der Zeit, kann eine neue Gruppierung der Teilnehmerstationen verbunden mit einer neuen Festlegung einer Schichtenanzahl für die MBMS-Nachrichten erfolgen, und/oder eine neue Bestimmung von Überragungsparametern. Werden beispielsweise die Basis-Informationen mit einer sehr niedrigen Datenrate ausgestrahlt, damit eine Teilnehmerstation am Zellrand diese korrekt empfangen und dekodieren kann, und verlässt diese Teilnehmerstation die Funkzelle, so kann daraufhin entschieden werden, die Basis-Informationen mit einer höheren Datenrate auszustrahlen, da die Teilnehmerstation mit den schlechtesten Funkübertragungsbedingungen nicht mehr vorhanden ist. Ergibt sich die Situation, dass für alle Teilnehmerstationen ähnliche Funkübertragungsbedingungen vorliegen, kann auf die Aufteilung von MBMS-Nachrichten in mehrere Schichten verzichtet werden, so dass die vollständigen MBMS-Nachrichten mit einheitlichen Übertragungsparametern ausgestrahlt werden.

## Patentansprüche

1. Verfahren zur Kommunikation per Funk, bei welchem
an eine Gruppe von Teilnehmerstationen (MS1, MS2, MS3) von einer netzseitigen Funkstation (NodeB) zu übertragende skalierbare Informationen (MBMS) vorliegen,
wobei die skalierbaren Informationen (MBMS) umfassen: Basis-Informationen (MBMS-BL) und die Basis-Informationen (MBMS-BL) ergänzende Informationen (MBMS-EL1, MBMS-EL2),
wobei die ergänzenden Informationen (MBMS-EL1, MBMS-EL2) die Qualität der Basis-Informationen (MBMS-BL) erhöhen, die Basis-Informationen (MBMS-BL) unter Verwendung von ersten Übertragungsparametern übertragen werden, wobei die ersten Übertragungsparameter an erste Funkverbindungsbedingungen angepasst sind, und
die ergänzenden Informationen (MBMS-EL1, MBMS-EL2) unter Verwendung von zweiten von den ersten Übertragungsparametern unterschiedlichen Übertragungsparametern übertragen werden, wobei die zweiten Übertragungsparameter an zweite gegenüber den ersten Funkverbindungsbedingungen bessere Funkverbindungsbedingungen angepasst sind.

2. Verfahren nach Anspruch 1, bei dem
die ersten Übertragungsparameter eine erste Datenrate und die zweiten Übertragungsparameter eine gegenüber der ersten Datenrate höhere Datenrate umfassen.

3. Verfahren nach Anspruch 1 oder 2, bei dem
die ersten Übertragungsparameter eine erste Sendeleistung und die zweiten Übertragungsparameter eine gegenüber der ersten Sendeleistung geringere Sendeleistung umfassen.

4. Verfahren nach einem der Ansprüche 1 bis 3, bei dem
die skalierbaren Informationen (MBMS) erste ergänzende Informationen (MBMS-EL1) und zweite ergänzende Informationen (MBMS-EL2) umfassen,
die ersten ergänzenden Informationen (MBMS-EL1) unter Verwendung der zweiten Übertragungsparameter übertragen werden, und
die zweiten ergänzenden Informationen (MBMS-EL2) unter Verwendung von dritten von den ersten und zweiten Übertragungsparametern unterschiedlichen Übertragungsparametern übertragen werden, wobei die dritten Übertragungsparameter an dritte gegenüber den ersten und zweiten Funkverbindungsbedingungen bessere Funkverbindungsbedingungen angepasst sind.

5. Verfahren nach einem der Ansprüche 1 bis 4, bei dem
die ersten Übertragungsparameter derart sind, dass die Basis-Informationen (MBMS-BL) von allen Teilnehmerstationen (MS1, MS2, MS3) der Gruppe empfangbar und verarbeitbar sind.

6. Verfahren nach einem der Ansprüche 1 bis 5, bei dem
die zweiten Übertragungsparameter derart sind, dass die ergänzenden Informationen (MBMS-EL1, MBMS-EL2) lediglich von einer Teilmenge der Teilnehmerstationen (MS1, MS2, MS3) der Gruppe empfangbar und verarbeitbar sind.

7. Verfahren nach einem der Ansprüche 1 bis 6, bei dem
in Abhängigkeit von den jeweiligen Funkverbindungsbedingungen eine Gruppierung der Teilnehmerstationen (MS1, MS2, MS3) der Gruppe in N Untergruppen erfolgt, und
N-1 ergänzende Informationen (MBMS-EL1, MBMS-EL2) mit jeweils voneinander unterschiedlichen Übertragungsparametern übertragen werden.

8. Verfahren nach einem der Ansprüche 1 bis 7, bei dem vor der Übertragung der skalierbaren Informationen (MBMS) die netzseitige Funkstation (NodeB) von einer oder mehreren Teilnehmerstationen (MS1, MS2, MS3) der Gruppe Informationen empfängt betreffend die jeweiligen Funkverbindungsbedingungen zwischen der Teilnehmerstation (MS1, MS2, MS3) und der netzseitigen Funkstation (NodeB).

9. Verfahren nach einem der Ansprüche 1 bis 8, bei dem es sich bei den skalierbaren Informationen (MBMS) um Videodaten handelt, und die ergänzenden Informationen (MBMS-EL1, MBMS-EL2) die Qualität der Basis-Informationen (MBMS-BL) hinsichtlich einer zeitlichen Auflösung und/oder einer örtlichen Auflösung und/oder eines Signalzu-Rausch-Verhältnisses erhöhen.

10. Verfahren nach einem der Ansprüche 1 bis 9, bei dem erste und zweite skalierbare Informationen (MBMS) übertragen werden,
wobei sich die ersten und/oder die zweiten Übertragungsparameter der ersten skalierbaren Informationen von den ersten und/oder den zweiten Übertragungsparametern der zweiten skalierbaren Informationen unterscheiden.

11. Netzseitige Funkstation (NodeB) zur Kommunikation per Funk,
welcher an eine Gruppe von Teilnehmerstationen (MS1, MS2, MS3) zu übertragende skalierbare Informationen (MBMS) vorliegen,
wobei die skalierbaren Informationen (MBMS) umfassen: Basis-Informationen (MBMS-BL) und die Basis-Informationen (MBMS-BL) ergänzende Informationen (MBMS-EL1, MBMS-EL2),
wobei die ergänzenden Informationen (MBMS-EL1, MBMS-EL2) die Qualität der Basis-Informationen (MBMS-BL) erhöhen, mit Mitteln zum Versenden der Basis-Informationen (MBMS-BL) unter Verwendung von ersten Übertragungsparametern,
wobei die ersten Übertragungsparameter an erste Funkverbindungsbedingungen angepasst sind, und
mit Mitteln zum Versenden der ergänzenden Informationen (MBMS-EL1, MBMS-EL2) unter Verwendung von zweiten von den ersten Übertragungsparametern unterschiedlichen Übertragungsparametern, wobei die zweiten Übertragungsparameter an zweite gegenüber den ersten Funkverbindungsbedingungen bessere Funkverbindungsbedingungen angepasst sind.
